# EUROPÄISCHE PATENTSCHRIFT

(11) **EP 1 816 094 B1**
(45) Veröffentlichungstag und Bekanntmachung des Hinweises auf die Patenterteilung: **21.09.2011**
(21) Anmeldenummer: 07001687.8
(22) Anmeldetag: 26.01.2007
(51) Int. Cl.: B65G 47/91, B25J 15/06, B65H 3/08, B66C 1/02, F16B 47/00

(54) **Sauggreifer**
Suction gripper
Pince aspirante

(30) Priorität: 06.02.2006 DE 102006005872
(43) Veröffentlichungstag der Anmeldung: 08.08.2007
(73) Patentinhaber: J. Schmalz GmbH, 72293 Glatten (DE)
(72) Erfinder: Schaaf, Walter, 72250 Freudenstadt-Grüntal (DE); Moll, Volker, 72290 Lossburg-Wittendorf (DE); Stahl, Tobias, 72280 Dornstetten (DE)
(74) Vertreter: Steimle, Josef

(56) Entgegenhaltungen:
- DE-A1- 4 128 659
- US-A- 3 261 388

## Beschreibung

Die Erfindung betrifft einen Sauggreifer zum Ansaugen von Werkstücken mit einem Unterdruckanschluss, einem elastischen Saugkörper und einem Saugkörperhalter, wobei der Saugkörper an seiner dem Werkstück zugewandten Seite eine einen Saugraum abgrenzende Dichtlippe aufweist und der Saugraum mit dem Unterdruckanschluss strömungsverbunden ist, wobei der Sauggreifer den Verschleißzustand erfassende oder anzeigende Mittel aufweist, deren Farbe sich ändert.

Sauggreifer werden verwendet, um Gegenstände oder Werkstücke anzusaugen, sodass sie entweder auf diese Weise fixiert und/oder gehandhabt werden können. Befinden sich die Sauggreifer an Manipulatoren, so kann der angesaugte Gegenstand transportiert werden. Wichtig hierfür ist, dass der Gegenstand korrekt angesaugt wird und im Saugraum ein ausreichend hoher Unterdruck herrscht, sodass der Gegenstand mit Sicherheit festgehalten wird. Zur Ermittlung des Unterdrucks werden Unterdrucksensoren verwendet, die in der Unterdruckleitung zum Sauggreifer vorgesehen sind und die den ermittelten Wert an eine Maschinensteuerung weitergeben, sodass diese bei Erreichen des gewünschten Unterdrucks die Unterdruckquelle abschaltet oder die Unterdruckleitung absperrt. Wird der Unterdruck nicht erreicht, dann kann die Ursache hierfür ein schadhafter oder abgenützter Sauggreifer sein, der ersetzt werden muss.

Aus der DE-A-41 28 659 ist ein Saugnapf bekannt, der an seiner dem Werkstück zugewandten Seite Vorsprünge aufweist, die mit Farbmarkierungen versehen sind. Mit diesen Farbmarkierungen kann Verschleiß oder Abrasion festgestellt werden. Als nachteilig wird angesehen, dass sich die Vorsprünge abnutzen müssen, so dass die Farbmarkierungen sich verändern.

Der Erfindung liegt daher die Aufgabe zugrunde, einen Sauggreifer der eingangs genannten Art derart auszugestalten, dass er einerseits preiswert ist, dass andererseits aber auch sofort erkennbar ist, ob er noch vollständig funktionsfähig ist.

Diese Aufgabe wird mit einem Sauggreifer der eingangs genannten Art erfindungsgemäß dadurch gelöst, dass der Saugkörper zumindest abschnittsweise ein Element aufweist, dessen Farbe sich im Laufe der Zeit oder mit der Anzahl von Lastwechselbeanspruchungen oder nach Anlegen eines Unterdrucks ändert.

Beim erfindungsgemäßen Sauggreifer wird nicht erst dann festgestellt, dass dieser, insbesondere der Saugkörper, schadhaft ist, wenn ein Unterdruck nicht mehr erreicht werden kann, weil zum Beispiel die Dichtlippe den Saugraum nicht mehr dicht abschließt oder weil der Saugkörper porös geworden ist. Das Erreichen der Verschleißgrenze wird schon früher festgestellt, da der Sauggreifer Mittel aufweist, die dessen Verschleißzustand durch eine Farbänderung anzeigen. Somit können frühzeitig Maßnahmen ergriffen werden, so dass einem Ausfall des Sauggreifers zuvorgekommen werden kann, ohne dass es zu Fehlfunktionen beim Ansaugen des Werkstücks kommt, indem zum Beispiel der Unterdruck nicht mehr aufgebracht werden kann. Insbesondere im Hinblick auf die Aufrechterhaltung der Sicherheit in Produktionsanlagen ist die Anzeige des Verschleißzustandes von sich abnutzenden Sauggreifern von besonderem Vorteil.

Der erfindungsgemäße Saugkörper weist zumindest abschnittsweise ein Element, dessen Farbe sich ändert, und zwar im Laufe der Zeit, oder mit der Anzahl von Wechselbeanspruchungen oder durch Anlegen eines Unterdrucks. Über diese Farbänderung kann angezeigt werden, welchen Zustand und insbesondere welchen Verschleißzustand der Sauggreifer besitzt. Es kann zum Beispiel das Alter des Sauggreifers angezeigt werden oder ob der Sauggreifer häufig oder selten benutzt wurde oder ob am Sauggreifer der gewünschte Unterdruck anliegt und somit die gewünschte Ansaugkraft erreichbar ist oder nicht.

Weitere Vorteile, Merkmale und Einzelheiten der Erfindung ergeben sich aus den Unteransprüchen sowie der nachfolgenden Beschreibung, in der unter Bezugnahme auf die Zeichnung besonders bevorzugte Ausführungsbeispiele im Einzelnen dargestellt sind. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: einen Querschnitt durch einen Sauggreifer;
- Figur 2: eine schematische Darstellung eines Sauggreifers mit einem Material, dessen Farbe sich ändert; und
- Figur 3: eine schematische Darstellung eines Sauggreifers, dessen Farbe sich bei einem bestimmten Unterdruck ändert.

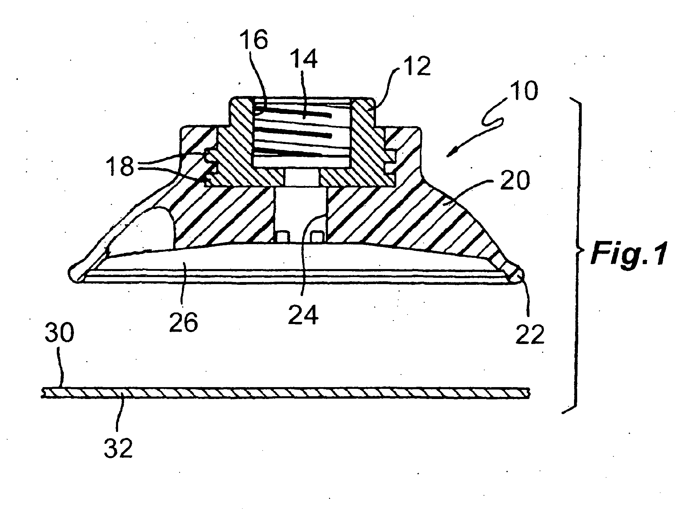

In der Figur 1, die einen Querschnitt durch einen insgesamt mit 10 bezeichneten Sauggreifer zeigt, ist mit dem Bezugszeichen 12 ein Saugkörperhalter bezeichnet. Dieser weist einen Unterdruckanschluss 14 auf, der zum Beispiel mit einem Innengewinde 16 versehen ist. Die Außenseite des Saugkörperhalters 12 ist mit zwei Umfangswülsten 18 versehen, an welchen ein elastischer Saugkörper 20 sicher fixiert ist. Dieser Saugkörper 20 ist in etwa glockenförmig ausgebildet und weist einen umlaufenden unteren Rand auf, der als Dichtlippe 22 ausgebildet ist. Außerdem weist der Saugkörper 20 einen zentralen Durchbruch 24 auf, der mit dem Unterdruckanschluss 14 kommuniziert. Der Durchbruch 24 mündet in einen Saugraum 26, der von der Dichtlippe 22 umgeben ist, die auf die Oberfläche 30 eines Werkstücks 32 aufgesetzt wird.

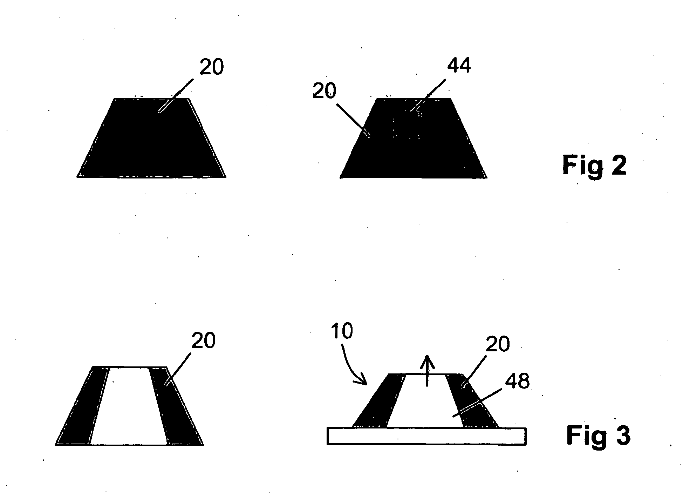

In den Figuren 2 und 3 ist jeweils rechts der verschlissene Zustand des Sauggreifers 10 dargestellt.

Die Figur 2 zeigt ein Ausführungsbeispiel, bei welchem der Saugkörper 20 aus einem Kunststoff hergestellt ist, dessen Farbe sich ändert, wobei die Farbänderung zeitabhängig ist. Auf diese Weise kann unabhängig vom Einsatz des Sauggreifers 10 dessen Alter angezeigt werden. Es besteht auch die Möglichkeit, dass der Sauggreifer 10 beziehungsweise der Saugkörper 20 mit einem Aufkleber 44 versehen ist, dessen Farbe sich mit der Zeit ändert. Die Farbänderung kann z.B. durch Sauerstoff- oder UV-Licht-Einwirkung hervorgerufen werden.

In der Figur 3 besteht das Material des Saugkörpers 20 aus einem eingefärbten Kunststoff, der die Farbe bei einem bestimmten Unterdruck ändert. Erreicht der Sauggreifer 10 diesen Unterdruck nicht, dann kann von der fehlenden Farbänderung auf das Erreichen der Verschleißgrenze geschlossen werden. Mit dem Bezugszeichen 48 ist der im Sauggreifer 10 herrschende Unterdruck bezeichnet.

Mit dem erfindungsgemäßen Sauggreifer 10 kann auf einfache Weise die Verschleißgrenze ermittelt werden und der Sauggreifer 10 kann vor Erreichen der Verschleißgrenze ausgetauscht werden.

## Patentansprüche

1. Sauggreifer (10) zum Ansaugen von Werkstücken (32) mit einem Unterdruckanschluss (14), einem elastischen Saugkörper (20) und einem Saugkörperhalter (12), wobei der Saugkörper (20) an seiner dem Werkstück (32) zugewandten Seite eine einen Saugraum (26) abgrenzende Dichtlippe (22) aufweist und der Saugraum (26) mit dem Unterdruckanschluss (14) strömungsverbunden ist, wobei der Sauggreifer (10) den Verschleißzustand erfassende oder anzeigende Mittel aufweist, deren Farbe sich ändert, **dadurch gekennzeichnet, dass** der Saugkörper (20) zumindest abschnittsweise ein Element aufweist, dessen Farbe sich im Laufe der Zeit oder mit der Anzahl von Lastwechselbeanspruchungen oder nach Anlegen eines Unterdrucks ändert.

2. Sauggreifer nach Anspruch 1, **dadurch gekennzeichnet, dass** das Element der Saugkörper (20) selbst oder Teil des Saugkörpers (20) ist.

## Claims

1. A suction gripper (10) for picking up workpieces (32) by suction, having an underpressure connection (14), an elastic suction body (20), and a suction body holder (12), in which the suction body (20), on its side toward the workpiece (32) has a sealing lip (22) that defines a suction chamber (26), and the suction chamber (26) communicates fluidically with the underpressure connection (14), and the suction gripper (10) has means whose color changes and which detect or indicate the wear status, **characterized in that** at least in some portions the suction body (20) has an element whose color changes over the course of time, or with the number of load change stresses, or after the application of an underpressure.

2. The suction gripper as defined by claim 1, **characterized in that** the element is the suction body (20) itself or part of the suction body (20).

## Revendications

1. Pince aspirante (10) pour aspirer des pièces (32) comprenant un branchement de dépression (14), un corps aspirant (20) élastique et un support de corps aspirant (12), le corps aspirant (20) présentant une lèvre d'étanchéité (22) délimitant un espace d'aspiration (26) sur son côté tourné vers la pièce (32) et l'espace d'aspiration (26) étant relié fluidiquement au branchement de dépression (14), la pince aspirante (10) présentant des moyens détectant ou affichant l'état d'usure, dont la couleur change, **caractérisé en ce que** le corps aspirant (20) présente au moins par endroits un élément dont la couleur change au cours du temps ou avec le nombre de cycles d'effort ou après l'application d'une dépression.

2. Pince aspirante selon la revendication 1, **caractérisé en ce que** l'élément est le corps aspirant (20) même ou une partie du corps aspirant (20).
